# FASCICULE DE BREVET EUROPEEN

(11) **EP 2 433 864 B1**
(45) Date de publication et mention de la délivrance du brevet: **14.01.2015**
(21) Numéro de dépôt: 11181789.6
(22) Date de dépôt: 19.09.2011
(51) Int. Cl.: B64C 9/32, F02K 1/70, F02K 3/06, F02K 1/82

(54) **Dispositif de décharge d'air pour turboréacteur d'avion à double flux**
Vorrichtung zum Ableiten von Luft für ein Zweistromturbotriebwerk eines Flugzeugs
Air-discharge device for an airplane turbofan engine

(30) Priorité: 23.09.2010 FR 1057661
(43) Date de publication de la demande: 28.03.2012
(73) Titulaire: Airbus Operations, 31060 Toulouse (FR)
(72) Inventeur: Bulin, Guillaume, 31700 Blagnac (FR); Surply, Thierry, 31700 Cornebarrieu (FR)
(74) Mandataire: Ilgart, Jean-Christophe

(56) Documents cités:
- EP-A1- 0 822 327
- WO-A1-2008/045070

## Description

### DOMAINE TECHNIQUE

La présente invention concerne un dispositif de décharge d'air pour turboréacteur d'avion à double flux, du type pouvant s'intégrer à une nacelle de turboréacteur pour permettre sur commande une décharge du flux secondaire du turboréacteur, c'est-à-dire une augmentation de la section de sortie de ce flux secondaire, en autorisant une partie de ce flux à s'échapper par ce dispositif.

Les dispositifs de décharge d'air de ce type permettent d'améliorer la stabilité de fonctionnement de la soufflante des turboréacteurs qui en sont équipés, de faciliter les changements de régime de rotation de cette soufflante, et corrélativement de diminuer les nuisances sonores dues à la soufflante, de dimensionner au plus juste cette dernière et de réduire la consommation en carburant de ces turboréacteurs.

### ÉTAT DE LA TECHNIQUE ANTÉRIEURE

Les dispositifs de décharge d'air pour turboréacteur d'avion à double flux de type connu peuvent être rangés en deux principales catégories :
- une première catégorie regroupant les dispositifs qui mettent en oeuvre une translation, selon l'axe du turboréacteur, d'un élément annulaire de nacelle tel qu'un capot d'inverseur de poussée, pour tour à tour découvrir ou recouvrir une ouverture prenant habituellement la forme d'une portion d'anneau ; et
- une seconde catégorie regroupant les dispositifs qui comprennent au moins un élément pivotant entre une position d'ouverture et une position d'obturation d'un orifice ménagé dans la nacelle du turboréacteur.

D'une manière générale, les dispositifs de la première catégorie présentent de nombreux inconvénients. La puissance nécessaire à leur activation est ainsi relativement élevée, ces dispositifs ne permettent pas une maîtrise efficace des nuisances sonores, et il est en général difficile d'assurer l'étanchéité entre les pièces mobiles de ces dispositifs.

Les dispositifs connus de la seconde catégorie précitée présentent aussi un certain nombre d'inconvénients.

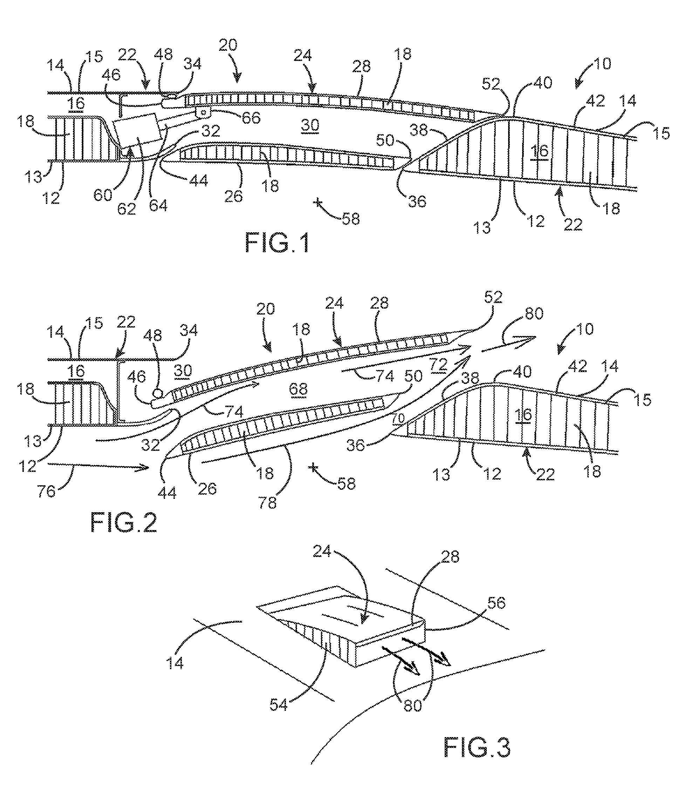

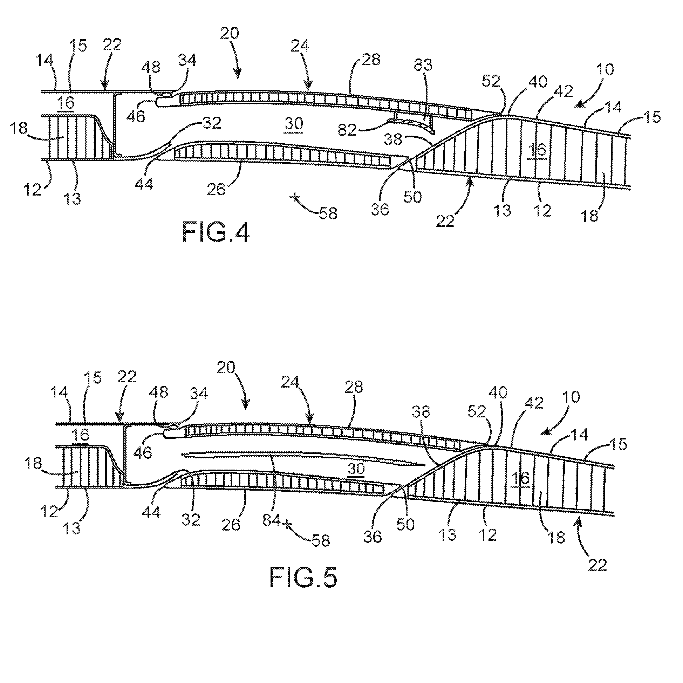

Ainsi, la demande de brevet FR 2.146.109 décrit un turboréacteur d'avion à double flux comprenant une rangée annulaire de dispositifs de décharge d'air comprenant chacun deux clapets pivotants obturant respectivement l'ouverture interne et l'ouverture externe d'un orifice traversant la nacelle du turboréacteur, comme illustré sur la figure 1 du document précité. Les deux clapets pivotants de chaque dispositif sont articulés à la nacelle au niveau de l'un de leurs bords amont et aval, de manière à pouvoir s'ouvrir par pivotement dans des sens opposés, soit totalement comme sur la figure 2 du document, pour remplir la fonction d'inverseur de poussée, soit partiellement comme sur la figure 4, pour remplir la fonction de dispositif de décharge d'air. La double fonction d'inverseur de poussée et de dispositif de décharge d'air, ainsi que l'indépendance des deux clapets pivotants, requiert l'utilisation de moyens d'actionnement, tels que des vérins électriques, qui soient nombreux et puissants, ce qui pénalise à la fois le coût et la masse de ces dispositifs et laisse peu de place pour d'éventuelles garnitures d'insonorisation qui sont pourtant nécessaires à la réduction des nuisances sonores émises par les turboréacteurs.

La demande de brevet WO 2008/045070 A1 illustre un dispositif d'inversion de poussée et de décharge d'air dans lequel les deux clapets pivotants en vis-à-vis sont reliés l'un à l'autre par un mécanisme complexe de bielles articulées permettant ici encore leur ouverture dans des sens opposés. En plus des inconvénients susmentionnés, ce type de dispositif présente des risques accrus de défaillance du fait de la complexité élevée du mécanisme d'actionnement des clapets pivotants.

La demande de brevet WO 2008/045050 A1 illustre un dispositif de décharge d'air dans lequel les éléments pivotants prennent la forme d'ailerons agencés à proximité du bord de fuite de la nacelle du turboréacteur. Du fait de la faible épaisseur de ces ailerons, ce dispositif ne permet pas une utilisation conjointe d'actionneurs et de garnitures d'insonorisation de manière satisfaisante. De plus, l'étanchéité entre les ailerons s'avère difficile à garantir.

### EXPOSÉ DE L'INVENTION

L'invention a notamment pour but d'apporter une solution simple, économique et efficace à ces problèmes, permettant d'éviter au moins en partie les inconvénients précités.

L'invention propose à cet effet un dispositif de décharge d'air pour turboréacteur d'avion à double flux, comprenant une structure fixe présentant une surface interne destinée à délimiter extérieurement un espace annulaire d'écoulement d'un flux secondaire d'un turboréacteur en aval d'une soufflante de ce dernier, ainsi qu'une surface externe destinée à caréner le turboréacteur. Le dispositif comprend en outre au moins une porte déplaçable entre une position d'ouverture et une position d'obturation d'un orifice correspondant de la structure fixe précitée qui traverse les surfaces interne et externe de cette structure fixe, chaque porte comprenant deux clapets, respectivement interne et externe, qui prolongent respectivement les surfaces interne et externe de la structure fixe dans la position d'obturation de l'orifice, et qui délimitent entre eux un conduit destiné, en position d'ouverture, au guidage d'une partie du flux secondaire vers l'extérieur du turboréacteur en direction de l'aval.

Selon l'invention, les clapets interne et externe de chaque porte sont solidaires mutuellement et sont articulés autour d'un axe de pivotement éloigné du clapet interne de la porte dans un sens allant du clapet externe vers le clapet interne de la porte lorsque cette dernière est en position d'obturation, de sorte qu'en position d'ouverture de la porte, l'extrémité amont dudit clapet interne fait saillie du côté intérieur par rapport à ladite surface interne de la structure fixe du dispositif, l'extrémité aval dudit clapet externe fait saillie du côté extérieur par rapport à ladite surface externe de ladite structure fixe, et ledit clapet interne est écarté de ladite structure fixe de sorte qu'il existe un passage d'air en aval de ce clapet interne, entre ce dernier et ladite structure fixe.

Du fait de la position de l'axe de pivotement, lorsque chaque porte est en position d'ouverture, le clapet interne de la porte forme une écope vis-à-vis du flux secondaire du turboréacteur, tandis que l'extrémité aval du clapet externe permet ainsi de guider l'air en sortie du dispositif.

D'une manière générale, le fait que les deux clapets de chaque porte soit solidaires l'un de l'autre permet de simplifier les moyens d'actionnement de chaque porte, comme cela apparaîtra plus clairement dans ce qui suit.

Il est à noter que le dispositif de décharge d'air selon l'invention peut être un dispositif autonome, comprenant une structure fixe et une porte amovible, et destiné à être monté dans un logement prévu à cet effet dans un capot annulaire de nacelle de turboréacteur d'avion. En variante, ce dispositif de décharge d'air peut être intégré à un tel capot annulaire, auquel cas la structure fixe du dispositif se confond avec ce capot annulaire.

De plus, il faut ici comprendre l'expression capot annulaire de nacelle comme pouvant désigner aussi bien une pièce annulaire unitaire permettant le support d'un turboréacteur et dont la surface interne délimite l'espace d'écoulement du flux secondaire du turboréacteur tandis que sa surface externe carène le turboréacteur, qu'un ensemble formé de plusieurs pièces annulaires, comprenant par exemple une pièce annulaire interne structurale de support d'un turboréacteur, parfois appelée par son acronyme anglais *OFS (Outer Fan Surface),* et un carénage annulaire externe monté sur la pièce interne précitée.

D'une manière générale, la simplification des moyens d'actionnement de chaque porte permet notamment un accroissement de la place disponible pour des moyens d'insonorisation.

Il peut s'agir de moyens d'insonorisation intégrés à la structure fixe du dispositif.

En variante ou de manière complémentaire, l'un au moins des clapets interne et externe de chaque porte du dispositif intègre des moyens d'insonorisation.

Dans le mode de réalisation préféré de l'invention, l'axe de pivotement de chaque porte du dispositif est, par rapport à chacun desdits clapets interne et externe de la porte lorsque cette dernière est en position d'obturation, situé à une distance des extrémités amont et aval dudit clapet telle que le rapport des longueurs des arcs de cercles respectivement décrits par ces extrémités amont et aval dudit clapet au cours d'une ouverture de ladite porte, est compris entre 0,5 et 2.

Ainsi, en position d'ouverture de ladite porte, le clapet interne permet une circulation d'air vers l'extérieur simultanément le long de ses deux faces opposées tout en formant une écope comme expliqué ci-dessus.

Dans le mode de réalisation préféré de l'invention, l'axe de pivotement de chaque porte du dispositif est situé sensiblement à égal distance des extrémités amont et aval dudit clapet externe de la porte lorsque cette dernière est en position d'obturation.

Dans ce cas, le rapport précité des longueurs des arcs de cercles respectivement décrits par les extrémités amont et aval dudit clapet externe au cours d'une ouverture de ladite porte est sensiblement égal à 1.

Par ailleurs, chaque porte du dispositif comporte avantageusement deux parois latérales reliant l'un à l'autre les clapets interne et externe de la porte.

Dans un mode de réalisation préféré de l'invention, le dispositif comprend des moyens de butée limitant l'ouverture de chaque porte du dispositif de sorte qu'en position d'ouverture, la surface interne de la structure fixe du dispositif s'étende au-delà de l'extrémité amont du clapet externe de chaque porte du dispositif dans le sens allant de la surface externe vers la surface interne de la structure fixe.

Cela permet notamment d'éviter que le flux d'air secondaire circulant en amont de chaque porte ne soit perturbé par le clapet externe de la porte.

En particulier, lorsque la structure fixe comporte deux parois, respectivement interne et externe, qui sont écartées l'une de l'autre, les moyens de butée peuvent, pour chaque porte du dispositif, être formés par un bord libre, ménagé dans la paroi interne de la structure fixe du dispositif en amont de l'orifice correspondant, et contre lequel l'extrémité amont du clapet externe de la porte vient en butée lorsque la porte est en position d'ouverture.

Dans le mode de réalisation préféré de l'invention, le clapet externe de chaque porte s'étend vers l'aval au-delà du clapet interne de la porte, lorsque la porte est en position d'ouverture.

Le clapet externe permet ainsi un recollement du flux d'air sortant du dispositif le long de la surface externe et limite ainsi les perturbations aérodynamiques, telles que l'augmentation de la traînée du turboréacteur, provoquées par l'écoulement de l'air sortant du dispositif.

La structure fixe du dispositif comprend avantageusement une cavité interne ménagée entre les surfaces interne et externe de cette structure fixe et dans laquelle sont logés des moyens d'actionnement de chaque porte, tels qu'un ou plusieurs vérins de commande.

Chaque porte peut ainsi être commandée par des moyens d'actionnement disposés à côté de la porte de manière à limiter au mieux les perturbations du flux d'air circulant au travers de la porte.

Le dispositif comprend de préférence un unique vérin de commande pour chaque porte de ce dispositif, afin de limiter au mieux l'encombrement des moyens d'actionnement de chaque porte. Chaque porte peut en effet être actionnée par un unique vérin sans qu'il soit nécessaire de recourir à des mécanismes complexes, du fait que les deux clapets de chaque porte sont solidaires mutuellement. L'actionnement de chaque porte peut ainsi être réalisé par des moyens simples, fiables et peu encombrants.

Chaque porte du dispositif comprend avantageusement au moins une ailette de guidage d'air qui s'étend entre lesdits clapets interne et externe de la porte et qui est incurvée en direction de l'aval dans le sens allant du clapet externe vers le clapet interne de la porte.

Une telle ailette permet d'améliorer le guidage du flux d'air circulant dans la porte correspondante du dispositif, et en particulier, d'améliorer le recollement de ce flux d'air le long de la surface externe de la structure fixe du dispositif et/ou de la nacelle équipée de ce dispositif, ce qui permet notamment de réduire la traînée du turboréacteur.

En variante ou de manière complémentaire, chaque porte du dispositif comprend au moins une paroi intermédiaire s'étendant entre les clapets interne et externe de la porte.

Une telle paroi intermédiaire vise également à améliorer le guidage du flux d'air circulant dans chaque porte du dispositif et le recollement de ce flux d'air le long de la surface externe de la structure fixe du dispositif et/ou de la nacelle équipée de ce dispositif.

L'invention concerne également un capot annulaire pour nacelle de turboréacteur d'avion à double flux, qui présente une surface interne destinée à délimiter extérieurement un espace annulaire d'écoulement du flux secondaire d'un turboréacteur en aval d'une soufflante de ce dernier, et une surface externe destinée à caréner le turboréacteur, et qui comporte au moins un dispositif de décharge d'air du type décrit ci-dessus, dont les surfaces interne et externe de la structure fixe prolongent respectivement les surfaces interne et externe du capot, ou dont la structure fixe se confond avec le capot.

Le capot annulaire pour nacelle comprend en outre avantageusement au moins un dispositif d'inversion de poussée.

Chaque dispositif d'inversion de poussée du capot annulaire est de préférence monté à faible distance en amont de chaque dispositif de décharge d'air de ce capot.

L'invention concerne encore une nacelle pour turboréacteur d'avion à double flux, comprenant un capot annulaire du type décrit ci-dessus.

L'invention concerne aussi un turboréacteur d'avion à double flux, comprenant une nacelle du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique partielle en coupe axiale d'un turboréacteur d'avion à double flux, illustrant un dispositif de décharge d'air selon un premier mode de réalisation préféré de l'invention, en position de fermeture ;
- la figure 2 est une vue semblable à la figure 1, illustrant le dispositif de décharge d'air en position d'ouverture ;
- la figure 3 est une vue schématique partielle en perspective du turboréacteur d'avion de la figure 1, illustrant le dispositif de décharge d'air en position d'ouverture ;
- la figure 4 est une vue schématique partielle en coupe axiale d'un turboréacteur d'avion à double flux, illustrant un dispositif de décharge d'air selon un deuxième mode de réalisation préféré de l'invention ;
- la figure 5 est une vue schématique partielle en coupe axiale d'un turboréacteur d'avion à double flux, illustrant un dispositif de décharge d'air selon un troisième mode de réalisation préféré de l'invention.

Dans l'ensemble de ces figures, des références identiques peuvent désigner des éléments identiques ou analogues.

### EXPOSÉ DÉTAILLÉ DE MODES DE RÉALISATION PREFERES

Les figures 1 à 3 représentent une partie d'un capot annulaire 10 d'inverseur de poussée faisant partie de la nacelle d'un turboréacteur d'avion à double flux conforme à un mode de réalisation préféré de l'invention.

Le capot annulaire 10 présente deux surfaces annulaires coaxiales, l'une interne 12 qui délimite extérieurement un espace annulaire d'écoulement du flux secondaire du turboréacteur, et l'autre externe 14 qui carène le turboréacteur. Ces deux surfaces sont formées sur des parois coaxiales distinctes, respectivement interne 13 et externe 15, entre lesquelles est ménagé un espace 16 dans lequel sont disposées des garnitures d'insonorisation 18, qui peuvent occuper l'espace 16 sur tout ou partie de son étendue transversale.

La figure 1 illustre plus particulièrement un dispositif de décharge d'air 20 destiné à permettre, sur commande, une évacuation d'une partie du flux secondaire au travers du capot annulaire 10, ce dernier pouvant comprendre une pluralité de dispositifs de ce type, par exemple répartis selon une rangée annulaire autour d'un axe de révolution du capot.

Le dispositif 20 comprend une structure fixe 22 qui, dans l'exemple représenté sur la figure 1, se confond avec le capot annulaire 10, ainsi qu'une porte pivotante 24 comportant deux clapets, respectivement interne 26 et externe 28, qui assurent l'obturation d'un orifice 30 traversant la structure fixe 22 et débouchant au travers des surfaces interne 12 et externe 14 de cette structure fixe 22. Chacun des clapets 26 et 28 de la porte 24 est formé d'une paroi creuse dans laquelle sont logées des garnitures d'insonorisation 18.

Bien que le dispositif 20 soit dans cet exemple totalement intégré au capot annulaire 10 de la nacelle, de sorte que la structure fixe 22 de ce dispositif se confond avec le capot 10, le dispositif de décharge d'air 20 peut, en variante, être dissocié du capot annulaire 10, auquel cas ce capot comporte au moins une ouverture prévue pour loger le dispositif de décharge d'air 20 de sorte que des surfaces respectivement interne et externe de la structure fixe 22 du dispositif prolongent les surfaces interne 12 et externe 14 du capot annulaire 10.

Dans ce qui suit, les surfaces interne 12 et externe 14 ainsi que les parois 13 et 15 du capot annulaire 10 se confondent avec celles de la structure fixe 22 du dispositif 20.

Comme le montre la figure 1, l'orifice 30 de la structure fixe 22 du dispositif 20 est délimité du côté amont par deux bords libres 32 et 34 respectifs des parois interne 13 et externe 15 de cette structure fixe.

Du côté aval de l'orifice 30, la paroi externe 15 de la structure fixe 22 du dispositif 20 est incurvée radialement vers l'intérieur en direction de l'amont de sorte qu'une extrémité de cette paroi externe 15 et une extrémité de la paroi interne 13 de la structure fixe 22 se rejoignent pour former un bord d'extrémité aval commun 36. La paroi externe 15 présente ainsi une partie inclinée 38 qui délimite l'orifice 30 et qui s'étend vers l'aval jusqu'à un sommet 40 de la paroi externe 15. Au-delà de ce sommet 40, la paroi externe 15 présente une partie 42 inclinée radialement vers l'intérieur en direction de l'aval et se rapprochant progressivement de la paroi interne 13 jusqu'à un bord de fuite du capot annulaire 10 de la nacelle, non visible sur les figures.

Lorsque la porte 24 est dans sa position d'obturation représentée sur la figure 1, des extrémités amont 44 et 46 respectives des clapets interne 26 et externe 28 de cette porte 24 viennent en appui respectivement contre les faces internes des parois interne 13 et externe 15 de la structure fixe 22. Un joint d'étanchéité élastique 48 est fixé sur la face externe du clapet externe 28 de la porte 24, à proximité de l'extrémité amont de celui-ci, de manière à s'interposer entre ce clapet 28 et la paroi externe 15 de la structure fixe 22.

Par ailleurs, des extrémités aval 50 et 52 respectives des clapets interne 26 et externe 28 de la porte 24 viennent en appui contre la partie inclinée 38 de la paroi externe 15, à proximité respectivement du bord d'extrémité aval 36 commun aux deux parois 13 et 15 et du sommet 40 de la paroi externe 15. Pour cela, le clapet externe 28 de la porte 24 s'étend vers l'aval au-delà du clapet interne 26 de cette porte 24.

D'une manière générale, lorsque la porte 24 est en position d'obturation de l'orifice 30, les clapets interne 26 et externe 28 de cette porte prolongent respectivement les surfaces interne 12 et externe 14 de la structure fixe 22 de manière à limiter au mieux les perturbations de l'écoulement de l'air le long de ces surfaces.

Les deux clapets 26 et 28 de la porte 24 sont solidarisés l'un à l'autre par deux parois latérales opposées 54 et 56 (figure 3), et sont montés en rotation autour d'un axe de pivotement 58 par des moyens conventionnels, non représentés sur les figures, prenant par exemple la forme de deux chapes latérales fixées sur la face interne du clapet interne 26 de la porte 24.

Comme le montrent les figures 1 et 2, l'axe de pivotement 58 est positionné radialement vers l'intérieur par rapport au clapet interne 26 de la porte 24 et à la surface interne 12 de la structure fixe 22. Autrement dit, l'axe de pivotement 58 est éloigné du clapet interne 26 de la porte 24 dans le sens allant du clapet externe 28 au clapet interne 26 de cette porte 24. De plus, cet axe de pivotement 58 est situé sensiblement à égale distance des extrémités amont 46 et aval 52 du clapet externe 28 de la porte 24. De ce fait, le rapport des longueurs des arcs de cercles respectivement décrits par les extrémités amont et aval de ce clapet externe 28 au cours d'une ouverture de la porte 24, est sensiblement égal à 1.

Plus généralement, il est à noter que le rapport des longueurs des arcs de cercles, qui sont respectivement décrits par les extrémités amont et aval de chacun des clapets interne 26 et externe 28 au cours d'une ouverture de la porte 24, est compris entre 0,5 et 2 dans le mode de réalisation décrit.

Le dispositif de décharge d'air 20 comprend en outre un vérin de commande 60, visible uniquement sur la figure 1. Ce vérin de commande 60 comporte un châssis 62 fixé à la structure fixe 22 et logé dans l'espace 16 ménagé entre les parois interne 13 et externe 15 de cette structure fixe 22, ainsi qu'une tige 64, mobile en translation, articulée à une chape 66 fixée sur la face interne du clapet externe 28 de la porte 24.

Dans l'exemple représenté sur les figures, le vérin de commande 60 est disposé du côté amont de l'orifice 30 de sorte que lorsque la tige 64 du vérin est déployée, elle maintient la porte 64 dans sa position d'obturation, tandis que lorsque la tige 64 se rétracte, elle entraîne avec elle une partie amont du clapet externe 28 de la porte 24 et provoque ainsi un pivotement de la porte 24 autour de l'axe de pivotement 58 (figure 2) .

Comme le montre la figure 2, en position d'ouverture, les clapets 26 et 28 de la porte 24 délimitent entre eux un conduit 68 de passage d'air.

De plus, l'extrémité aval du clapet interne 26 de la porte 24 étant écartée de la partie inclinée 38 de la paroi externe 15 de la structure fixe 22, il existe un passage d'air 70 supplémentaire entre ce clapet interne 26 et cette paroi 15.

En outre, l'extrémité amont 44 du clapet interne 26 fait saillie vers l'intérieur par rapport à la surface interne 12 de la structure fixe 22 et forme ainsi une écope de prélèvement d'air. Le clapet interne 26 présente un profil d'aile avec un extrados du côté extérieur et un intrados du côté intérieur de la porte 24, ce qui permet de minimiser les risques de décollement aérodynamique de nature à pénaliser les performances du turboréacteur.

Par ailleurs, l'extrémité aval 52 du clapet externe 28 de la porte 24 fait saillie vers l'extérieur par rapport à la surface externe 14 de la structure fixe 22. Plus précisément, l'étendue vers l'aval du clapet externe 28 de la porte 24 est telle que l'extrémité aval 52 de ce clapet est située sensiblement au droit du sommet 40 de la paroi externe 15 de la structure fixe 22 du dispositif 20. Ainsi, le clapet externe 28 délimite avec cette paroi externe 15 une extension 72 vers l'aval du conduit 68 de la porte 24, extension dans laquelle débouche également le passage d'air 70 précité.

En outre, comme cela apparaît sur la figure 2, le bord libre 32 de la paroi interne 13 de la structure fixe 22 forme une butée de fin de course pour l'extrémité amont 46 du clapet externe 28 de la porte 24 en position d'ouverture.

En fonctionnement, lors d'une commande d'ouverture du dispositif de décharge d'air 20 initialement en position d'obturation comme sur la figure 1, la tige 64 du vérin de commande 60 se rétracte, provoquant un pivotement de la porte 24 autour de l'axe de pivotement 58 jusqu'à sa position d'ouverture des figures 2 et 3. Une partie 74 du flux d'air secondaire 76 du turboréacteur pénètre alors dans le conduit 68 de la porte 24 tandis qu'une autre partie 78 de ce flux d'air pénètre dans le passage d'air 70 en aval de la porte 24. Les deux parties 74 et 78 précitées du flux secondaire se rejoignent dans l'extension 72 du conduit 68 puis sortent du turboréacteur, comme symbolisé par la flèche 80. Bien entendu, le reste du flux secondaire poursuit son écoulement vers l'aval dans le turboréacteur pour en sortir par une tuyère, d'une manière bien connue.

La conformation de la paroi externe 15 de la structure fixe 22 du dispositif 20 en aval de l'orifice 30 et l'extension du clapet externe 28 de la porte 24 jusqu'au droit du sommet 40 de la paroi externe 15 favorisent un recollement du flux d'air 80 provenant du dispositif 20 le long de la paroi externe 15, ce qui permet de réduire au mieux l'impact d'une ouverture du dispositif 20 sur la traînée du turboréacteur.

Par ailleurs, il est à noter que la surface interne 12 de la structure fixe 22 s'étend radialement vers l'intérieur par rapport à l'extrémité amont 46 du clapet externe 28 de la porte 24, de sorte que ce dernier ne perturbe pas l'écoulement du flux d'air secondaire 76 dans le turboréacteur en amont de l'orifice 30.

D'une manière générale, le dispositif de décharge d'air 20 présente l'avantage de pouvoir être manoeuvré par des moyens simples, peu encombrants, et de relativement faible puissance.

En variante, comme l'illustre la figure 4, la porte 24 du dispositif 20 peut en outre comporter une ou plusieurs ailettes 82 s'étendant entre les deux clapets de la porte pour améliorer davantage le guidage de l'air en sortie du dispositif. A cet effet, les ailettes 82 sont de préférence incurvées radialement vers l'intérieur de l'amont vers l'aval, comme sur la figure 4.

En pratique, les ailettes 82 peuvent être fixées à l'un ou l'autre des clapets de la porte 24. Dans l'exemple représenté sur la figure 4, la porte 24 comporte une unique ailette 82 raccordée au clapet externe 28 de la porte au moyen d'une paroi 83 s'étendant perpendiculairement à ce clapet.

En variante ou de manière complémentaire, la porte 24 du dispositif 20 peut comporter une paroi intermédiaire 84 s'étendant entre les clapets interne 26 et externe 28 de la porte 24, de manière sensiblement parallèle à ces clapets, comme l'illustre la figure 5.

## Revendications

1. Dispositif de décharge d'air (20) pour turboréacteur d'avion à double flux, comprenant une structure fixe (22) présentant une surface interne (12) destinée à délimiter extérieurement un espace annulaire d'écoulement d'un flux secondaire (76) d'un turboréacteur en aval d'une soufflante de ce dernier, ainsi qu'une surface externe (14) destinée à caréner ledit turboréacteur, le dispositif comprenant en outre au moins une porte (24) déplaçable entre une position d'ouverture et une position d'obturation d'un orifice correspondant (30) de ladite structure fixe (22) qui traverse lesdites surfaces interne (12) et externe (14) de cette structure fixe (22), chaque porte (24) comprenant deux clapets, respectivement interne (26) et externe (28), qui prolongent respectivement lesdites surfaces interne (12) et externe (14) de la structure fixe (22) dans ladite position d'obturation dudit orifice (30), et qui délimitent entre eux un conduit (68) destiné, en position d'ouverture, au guidage d'une partie (74) dudit flux secondaire (76) vers l'extérieur du turboréacteur en direction de l'aval, le dispositif étant **caractérisé en ce que** lesdits clapets interne (26) et externe (28) de chaque porte (24) sont solidaires mutuellement et sont articulés autour d'un axe de pivotement (58) éloigné dudit clapet interne (26) de la porte (24) dans un sens allant dudit clapet externe (28) vers ledit clapet interne (26) de la porte (24) lorsque cette dernière est en position d'obturation, de sorte qu'en position d'ouverture de la porte, l'extrémité amont dudit clapet interne (26) fait saillie du côté intérieur par rapport à ladite surface interne (12) de la structure fixe (22) du dispositif, l'extrémité aval dudit clapet externe (28) fait saillie du côté extérieur par rapport à ladite surface externe (14) de ladite structure fixe (22), et ledit clapet interne (26) est écarté de ladite structure fixe (22) de sorte qu'il existe un passage d'air en aval de ce clapet interne (26), entre ce dernier et ladite structure fixe (22).

2. Dispositif selon la revendication 1, **caractérisé en ce que** l'axe de pivotement (58) de chaque porte (24) du dispositif est, par rapport à chacun desdits clapets interne (12) et externe (14) de la porte (24) lorsque cette dernière est en position d'obturation, situé à une distance des extrémités amont et aval dudit clapet telle que le rapport des longueurs des arcs de cercles respectivement décrits par ces extrémités amont et aval au cours d'une ouverture de ladite porte, est compris entre 0,5 et 2.

3. Dispositif selon la revendication 1 ou 2, **caractérisé en ce que** l'axe de pivotement (58) de chaque porte (24) du dispositif est situé sensiblement à égal distance des extrémités amont et aval dudit clapet externe (14) de la porte (24) lorsque cette dernière est en position d'obturation.

4. Dispositif selon l'une quelconque des revendications 1 à 3, **caractérisé en ce que** chaque porte (24) du dispositif comporte deux parois latérales (54, 56) reliant l'un à l'autre les clapets interne (26) et externe (28) de la porte (24).

5. Dispositif selon l'une quelconque des revendications 1 à 4, **caractérisé en ce qu'**il comprend des moyens de butée (32) limitant l'ouverture de chaque porte (24) du dispositif de sorte qu'en position d'ouverture, ladite surface interne (12) de ladite structure fixe (22) du dispositif (20) s'étende au-delà de l'extrémité amont (46) du clapet externe (28) de chaque porte (24) du dispositif (20) dans le sens allant de la surface externe (14) vers la surface interne (12) de ladite structure fixe (22).

6. Dispositif selon l'une quelconque des revendications 1 à 5, **caractérisé en ce que** ledit clapet externe (28) de chaque porte (24) s'étend vers l'aval au-delà dudit clapet interne (26) de la porte (24), lorsque cette porte (24) est en position d'ouverture.

7. Dispositif selon l'une quelconque des revendications 1 à 6, **caractérisé en ce que** la structure fixe (22) du dispositif (20) comprend une cavité interne (16) ménagée entre lesdites surfaces interne (12) et externe (14) de cette structure fixe (22) et dans laquelle sont logés des moyens (60) de commande de chaque porte (24).

8. Dispositif selon l'une quelconque des revendications 1 à 7, **caractérisé en ce que** chaque porte (24) du dispositif (20) comprend au moins une ailette (82) de guidage d'air qui s'étend entre lesdits clapets interne (26) et externe (28) de la porte (24) et qui est incurvée en direction de l'aval dans le sens allant du clapet externe (28) vers le clapet interne (26) de la porte (24).

9. Capot annulaire (10) pour nacelle de turboréacteur d'avion à double flux, présentant une surface interne (12) destinée à délimiter extérieurement un espace annulaire d'écoulement du flux secondaire (76) d'un turboréacteur en aval d'une soufflante de ce dernier, ainsi qu'une surface externe (14) destinée à caréner ledit turboréacteur, **caractérisé en ce qu'**il comprend au moins un dispositif de décharge d'air (20) selon l'une quelconque des revendications 1 à 8, dont les surfaces interne et externe de ladite structure fixe (22) prolongent respectivement lesdites surfaces interne et externe dudit capot, ou dont la structure fixe (22) se confond avec ledit capot (10).

10. Capot annulaire selon la revendication 9, **caractérisé en ce qu'**il comprend en outre au moins un dispositif d'inversion de poussée.

11. Nacelle pour turboréacteur d'avion à double flux, **caractérisée en ce qu'**elle comprend un capot annulaire (10) selon la revendication 9 ou 10.

12. Turboréacteur d'avion à double flux, **caractérisé en ce qu'**il comprend une nacelle selon la revendication 11.

## Patentansprüche

1. Luftablassvorrichtung (20) für ein Zweistrom-Turbotriebwerk eines Luftfahrzeugs, die eine ortsfeste Struktur (22) enthält, welche eine Innenfläche (12), die dazu bestimmt ist, außen einen ringförmigen Strömungsraum eines Sekundärstroms (76) eines Turbotriebwerks stromabwärts eines Gebläses dieses letzteren zu begrenzen, sowie eine Außenfläche (14) aufweist, die dazu bestimmt ist, das Turbotriebwerk windschlüpfig zu machen, wobei die Vorrichtung außerdem mindestens eine Tür (24) enthält, die zwischen einer Öffnungsstellung und einer Schließstellung einer entsprechenden Öffnung (30) der ortsfesten Struktur (22) beweglich ist, die die Innen- (12) und Außenflächen (14) dieser ortsfesten Struktur (22) durchquert, wobei jede Tür (24) zwei Klappen enthält, eine innere (26) bzw. eine äußere (28), die die Innen- (12) bzw. Außenfläche (14) der ortsfesten Struktur (22) in der Schließstellung der Öffnung (30) verlängern, und die zwischen sich einen Kanal (68) begrenzen, der in der Öffnungsstellung zum Leiten eines Teils (74) des Sekundärstroms (76) stromabwärts nach außerhalb des Turbotriebwerks bestimmt ist, wobei die Vorrichtung **dadurch gekennzeichnet ist, dass** die innere (26) und äußere Klappe (28) jeder Tür (24) fest miteinander verbunden und um eine Schwenkachse (58) angelenkt sind, die von der inneren Klappe (26) der Tür (24) in einer Richtung von der äußeren Klappe (28) zur inneren Klappe (26) der Tür (24) entfernt ist, wenn letztere in der Schließstellung ist, so dass in der Öffnungsstellung der Tür das vordere Ende der inneren Klappe (26) auf der Innenseite bezüglich der Innenfläche (12) der ortsfesten Struktur (22) der Vorrichtung vorsteht, das stromabwärtige Ende der äußeren Klappe (28) auf der Außenseite bezüglich der Außenfläche (14) der ortsfesten Struktur (22) vorsteht, und die innere Klappe (26) von der ortsfesten Struktur (22) abgespreizt ist, so dass es einen Luftdurchlass stromabwärts dieser inneren Klappe (26) zwischen dieser letzteren und der ortsfesten Struktur (22) gibt.

2. Vorrichtung nach Anspruch 1, **dadurch gekennzeichnet, dass** die Schwenkachse (58) jeder Tür (24) der Vorrichtung sich bezüglich jeder der inneren (12) und äußeren Klappe (14) der Tür (24), wenn letztere in der Schließstellung ist, in einem derartigen Abstand zum stromaufwärtigen und stromabwärtigen Ende der Klappe befindet, dass das Verhältnis der Längen der von diesem stromaufwärtigen und stromabwärtigen Ende während eines Öffnungsvorgangs der Tür beschriebenen Kreisbögen zwischen 0,5 und 2 liegt.

3. Vorrichtung nach Anspruch 1 oder 2, **dadurch gekennzeichnet, dass** die Schwenkachse (58) jeder Tür (24) der Vorrichtung sich im Wesentlichen in gleichem Abstand zum stromaufwärtigen und stromabwärtigen Ende der äußeren Klappe (14) der Tür (24) befindet, wenn letztere in der Schließstellung ist.

4. Vorrichtung nach einem der Ansprüche 1 bis 3, **dadurch gekennzeichnet, dass** jede Tür (24) der Vorrichtung zwei Seitenwände (54, 56) aufweist, die die innere (26) und äußere Klappe (28) der Tür (24) miteinander verbinden.

5. Vorrichtung nach einem der Ansprüche 1 bis 4, **dadurch gekennzeichnet, dass** sie Anschlageinrichtungen (32) enthält, die das Öffnen jeder Tür (24) der Vorrichtung so begrenzen, dass in der Öffnungsstellung die Innenfläche (12) der ortsfesten Struktur (22) der Vorrichtung (20) sich über das stromaufwärtige Ende (46) der äußeren Klappe (28) jeder Tür (24) der Vorrichtung (20) in der Richtung von der Außenfläche (14) zur Innenfläche (12) der ortsfesten Struktur (22) hinaus erstreckt.

6. Vorrichtung nach einem der Ansprüche 1 bis 5, **dadurch gekennzeichnet, dass** die äußere Klappe (28) jeder Tür (24) sich stromabwärts über die innere Klappe (26) der Tür (24) hinaus erstreckt, wenn diese Tür (24) in der Öffnungsstellung ist.

7. Vorrichtung nach einem der Ansprüche 1 bis 6, **dadurch gekennzeichnet, dass** die ortsfeste Struktur (22) der Vorrichtung (20) einen inneren Hohlraum (16) enthält, der zwischen den Innen-(12) und Außenflächen (14) dieser ortsfesten Struktur (22) ausgespart ist und in dem Steuereinrichtungen (60) jeder Tür (24) untergebracht sind.

8. Vorrichtung nach einem der Ansprüche 1 bis 7, **dadurch gekennzeichnet, dass** jede Tür (24) der Vorrichtung (20) mindestens eine Luftleitrippe (82) enthält, die sich zwischen der inneren (26) und äußeren Klappe (28) der Tür (24) erstreckt und stromabwärts in der Richtung von der äußeren Klappe (28) zur inneren Klappe (26) der Tür (24) gekrümmt ist.

9. Ringförmige Abdeckung (10) für eine Gondel eines Zweistrom-Turbotriebwerks eines Flugzeugs, welche eine Innenfläche (12), die dazu bestimmt ist, außen einen ringförmigen Strömungsraum des Sekundärstroms (76) eines Turbotriebwerks stromabwärts eines Gebläses dieses letzteren zu begrenzen, sowie eine Außenfläche (14) aufweist, die dazu bestimmt ist, das Turbotriebwerk windschlüpfig zu machen, **dadurch gekennzeichnet, dass** sie mindestens eine Luftablassvorrichtung (20) nach einem der Ansprüche 1 bis 8 enthält, deren Innen- und Außenflächen der ortsfesten Struktur (22) die Innen- bzw. Außenflächen der Abdeckung verlängern, oder deren ortsfeste Struktur (22) mit der Abdeckung (10) zusammenfällt.

10. Ringförmige Abdeckung nach Anspruch 9, **dadurch gekennzeichnet, dass** sie außerdem mindestens eine Schubumkehrvorrichtung aufweist.

11. Gondel für ein Zweistrom-Turbotriebwerk eines Flugzeugs, **dadurch gekennzeichnet, dass** sie eine ringförmige Abdeckung (10) nach Anspruch 9 oder 10 enthält.

12. Zweistrom-Turbotriebwerk eines Flugzeugs, **dadurch gekennzeichnet, dass** es eine Gondel nach Anspruch 11 enthält.

## Claims

1. An air discharging device (20) for an aircraft double-flow turbine engine, comprising a fixed structure (22) having an internal surface (12) intended to outwardly delimit an annular flow space for a secondary flow (76) of a turbine engine downstream of a fan thereof, as well as an external surface (14) intended for fairing the turbine engine, the device also comprising at least one door (24) displaceable between an open position and a closed position of a corresponding orifice (30) of the aforementioned fixed structure (22) that passes through the internal (12) and external (14) surfaces of this fixed structure (22), each door (24) comprising two valves, an internal one (26) and an external one (28), which respectively extend said internal (12) and external (14) surfaces of the fixed structure (22) in said closed position, and which delimit between them a conduit (68) intended, in the open position, for guiding a portion (74) of the secondary flow (76) outwards in the downstream direction,
the device being **characterized in that** the internal (26) and external (28) valves of each door (24) are integral with each other and are hinged around a pivot axis (58) remote from the internal valve (26) of the door (24) in a direction going from the external valve (28) toward the internal valve (26) of the door (24) when the latter is in the closed position, so that in the open position of the door, the upstream end of said internal valve (26) protrudes from the inner side relative to said internal surface (12) of the fixed structure (22) of the device, the downstream end of said external valve (28) protrudes from the external side relative to said external surface (14) of said fixed structure (22), and said internal valve (26) is spaced away from said fixed structure (22) so that an air passage exists downstream of said internal valve (26), between the latter and said fixed structure (22).

2. The device according to claim 1, **characterized in that** the pivot axis (58) of each door (24) of the device is, relative to each of said internal (12) and external (14) valves of the door (24) when the latter is in the closed position, situated away from the upstream and downstream ends of said valve so that the ratio of the lengths of the arcs of circle respectively described by said upstream and downstream ends of the valve during an opening of said door, is between 0.5 and 2.

3. The device according to claim 1 or 2, **characterized in that** the pivot axis (58) of each door (24) of the device is situated substantially at equal distances from the upstream and downstream ends of said external valve (14) of the door (24) when the latter is in the closed position.

4. The device according to any one of claims 1 to 3, **characterized in that** each door (24) of the device includes two side walls (54, 56) connecting the internal (26) and external (28) valves of the door (24) to each other.

5. The device according to any one of claims 1 to 4, **characterized in that** it comprises stop means (32) limiting the opening of each door (24) of the device so that in the open position, the internal surface (12) of the fixed structure (22) of the device (20) extends beyond the upstream end (46) of the external valve (28) of each door (24) of the device (20) in the direction going from the external surface (14) toward the internal surface (12) of the fixed structure (22).

6. The device according to any one of claims 1 to 5, **characterized in that** said external valve (28) of each door (24) extends in the downstream direction beyond the internal valve (26) of the door (24), when the door (24) is in the open position.

7. The device according to any one of claims 1 to 6, **characterized in that** the fixed structure (22) of the device (20) comprises an internal cavity (16) arranged between the internal (12) and external (14) surfaces of said fixed structure (22) and in which actuating means (60) for each door (24) are housed.

8. The device according to any one of claims 1 to 7, **characterized in that** each door (24) of the device (20) comprises at least one air guidance fin (82) that extends between said internal (26) and external (28) valves of the door (24) and that is curved in the downstream direction in the direction going from the external valve (28) toward the internal valve (26) of the door (24).

9. An annular cowl (10) for an aircraft double-flow turbine engine nacelle, having an internal surface (12) intended to outwardly define an annular flow space for the secondary flow (76) of a turbine engine downstream of a fan thereof, and an external surface (14) intended to fair the turbine engine, said cowl being **characterized in that** it comprises at least one air discharging device (20) according to any one of claims 1 to 8, whereof the internal and external surfaces of the fixed structure (22) respectively extend the internal and external surfaces of the cowl, or whereof the fixed structure (22) is said cowl (10).

10. The annular cowl according to claim 9, **characterized in that** it also comprises at least one thrust reverser device.

11. A nacelle for an aircraft with a dual-flow turbine engine, **characterized in that** it comprises an annular cowl (10) according to claim 9 or 10.

12. An aircraft dual-flow turbine engine, **characterized in that** it comprises a nacelle according to claim 11.
